# FASCICULE DE BREVET EUROPEEN

(11) **EP 0 600 778 B1**
(45) Date de publication et mention de la délivrance du brevet: **24.06.1998**
(21) Numéro de dépôt: 93402881.2
(22) Date de dépôt: 29.11.1993
(51) Int. Cl.: B60H 1/00

(54) **Dispositif de chauffage-ventilation et/ou de climatisation pour l'habitacle d'un véhicule automobile**
Vorrichtung für die Heizung, Lüftung und/oder Klimatisierung eines Fahrzeuginnenraumes
Heating, ventilation and/or air conditioning device for a motor vehicle interior

(30) Priorité: 02.12.1992 FR 9214522
(43) Date de publication de la demande: 08.06.1994
(73) Titulaire: VALEO THERMIQUE HABITACLE, 78320 Le Mesnil-Saint-Denis (FR)
(72) Inventeur: Loup, Didier, F 78310 Maurepas (FR)
(74) Mandataire: Gamonal, Didier

(56) Documents cités:
- EP-A- 0 392 296
- DE-A- 4 000 990
- US-A- 5 062 473
- PATENT ABSTRACTS OF JAPAN vol. 6, no. 256 (M-179)(1134) 15 Décembre 1982 & JP-A-57 151 410 (NISSAN JIDOSHA) 18 Septembre 1982

## Description

L'invention concerne un dispositif de chauffage-ventilation et/ou de climatisation pour l'habitacle d'un véhicule automobile.

Elle concerne plus particulièrement un dispositif du type comprenant un conduit d'air froid et un conduit d'air mixé propres à distribuer respectivement un flux d'air froid et un flux d'air mixé au travers d'une bouche d'aération commune communiquant avec l'habitacle du véhicule automobile.

Dans les dispositifs connus de ce type, l'air froid peut être soit de l'air provenant de l'extérieur de l'habitacle et éventuellement climatisé, soit de l'air recyclé provenant de l'intérieur de l'habitacle.

L'air mixé est de l'air dont la température peut être ajustée en mélangeant, en proportions réglables, un débit d'air froid et un débit d'air chaud. Ce dernier est obtenu en chauffant de l'air froid au travers d'un échangeur de chaleur qui est habituellement traversé par le liquide de refroidissement du moteur du véhicule automobile. La température de l'air mixé est donc toujours supérieure à la température de l'air froid.

Cet air mixé est envoyé ensuite vers différentes bouches d'aération pour être réparti, suivant des modes de distribution choisis, en différentes régions de l'habitacle. Ces bouches comprennent généralement au moins une bouche de dégivrage/désembuage située à la base du pare-brise, au moins une bouche communiquant avec la partie inférieure de l'habitacle pour le chauffage des pieds des passagers, des bouches latérales situées aux deux extrémités de la planche de bord, et au moins une bouche placée sur la planche de bord pour diriger de l'air vers le tronc et le visage des passagers du véhicule.

Cette dernière bouche, appelée aussi "aérateur", distribue non seulement de l'air mixé, mais aussi de l'air froid pour que les passagers du véhicule reçoivent un air à température plus basse que celle de l'air mixé envoyé derrière le pare-brise, en direction des pieds des passagers ou vers les vitres latérales.

On obtient ainsi une distribution à deux niveaux de température différents assurant un meilleur confort et une meilleure sécurité pour les passagers du véhicule, et notamment le conducteur.

On connaît, d'après le document DE-A-3 338 768, un dispositif du type précité dans lequel il est prévu un volet unique pour contrôler le flux d'air froid et le flux d'air mixé en sortie du conduit d'air froid et du conduit d'air mixé et à l'entrée d'une conduite commune aboutissant à la bouche d'aération.

Il est également connu par le document EP-A-0392296 un autre dispositif dans lequel il est prévu un premier volet apte à contrôler les flux d'air en sortie de deux conduits et un second volet apte à en contrôler le débit, les deux volets étant disposés en amont de la bouche d'aération ainsi que des premiers moyens de commande agissant sur le premier volet et des seconds moyens de commande agissant sur le second volet.

L'inconvénient principal de ces dispositifs connus résident dans le fait que l'on ne peut modifier le flux d'air froid indépendamment du flux d'air mixé et inversement.

Il en résulte que ces dispositifs connus permettent soit de distribuer simultanément de l'air froid et de l'air mixé, et cela toujours dans la même proportion, soit d'interrompre la distribution de l'air froid et de l'air mixé.

Du fait que l'air froid et l'air mixé sont toujours délivrés dans la même proportion, au travers de la bouche d'aération commune, la température de l'air sortant de cette bouche d'aération est toujours la même pour un réglage de température donné de l'air mixé.

L'invention a notamment pour but de surmonter les inconvénients précités.

L'invention propose en conséquence un dispositif de chauffage-ventilation et/ou de climatisation pour l'habitacle d'un véhicule automobile, comprenant au moins un premier conduit et au moins un second conduit propres à distribuer respectivement un flux d'air froid et un flux d'air mixé au travers d'une bouche d'aération commune communiquant avec l'habitacle, ledit dispositif comprenant un premier volet et un second volet disposés en amont de la bouche d'aération ainsi que des premiers moyens de commande agissant sur le premier volet et des seconds moyens de commande agissant sur le second volet, caractérisé en ce que le premier volet est propre à contrôler uniquement le débit du flux d'air froid en sortie du premier conduit et le second volet est propre à contrôler uniquement le débit du flux d'air mixé en sortie du second conduit.

Il en résulte que le dispositif permet de régler le débit du flux d'air froid et le débit du flux d'air mixé et par conséquent la température du flux d'air qui résulte du mélange du flux d'air froid et du flux d'air mixé et qui est distribué dans l'habitacle au travers de la bouche d'aération précitée.

La température du flux d'air distribué par cette bouche d'aération peut être ajustée à la valeur souhaitée entre la température du flux d'air froid et la température du flux d'air mixé.

Dans une forme de réalisation préférée de l'invention, le premier volet est un volet pivotant propre à prendre une multiplicité de positions entre une position d'ouverture et une position de fermeture du premier conduit.

Avantageusement, le second volet est également un volet pivotant propre à prendre une multiplicité de positions entre une position d'ouverture et une position de fermeture du second conduit.

Les premiers moyens de commande agissant sur le premier volet comprennent avantageusement une molette rotative entraînant le volet en rotation par l'intermédiaire d'une biellette.

De façon correspondante, les seconds moyens de commande agissant sur le second volet comprennent avantageusement une molette rotative agissant sur le second volet par l'intermédiaire d'une biellette.

Dans une forme de réalisation préférée de l'invention, le dispositif comprend un premier conduit de distribution d'air froid contrôlé par un premier volet et placé entre deux seconds conduits de distribution d'air mixé contrôlés chacun par un second volet.

On peut ainsi réserver les deux seconds conduits pour respectivement la partie droite et la partie gauche de la bouche d'aération, laquelle est alors située au centre de la planche de bord du véhicule automobile.

Dans cette forme de réalisation préférée de l'invention, la bouche d'aération comprend avantageusement deux grilles dont l'une est propre à être traversée par le flux d'air mixé provenant d'un des deux seconds conduits et par une partie de l'air froid du premier conduit, et dont l'autre est propre à être traversée par le flux d'air mixé provenant de l'autre second conduit et par l'autre partie du flux d'air issu du premier conduit.

On peut ainsi régler les températures respectives des deux flux d'air issus des deux grilles de la bouche d'aération.

Selon une autre caractéristique de l'invention, les premiers moyens de commande comprennent une molette rotative placée entre les deux grilles et actionnant le premier volet, tandis que les seconds moyens de commande comprennent, pour chacun des seconds volets, une molette rotative séparée.

Selon une autre caractéristique de l'invention, le dispositif comprend une chambre de mélange située en aval des sorties du premier conduit et du second conduit et en amont de la bouche d'aération. Cette chambre de mélange facilite le mélange du flux d'air froid issu du second conduit et du flux d'air chaud issu du second conduit, ce qui permet d'homogénéiser la température du flux d'air distribué dans l'habitacle à partir de la bouche d'aération.

Dans la description qui suit, faite seulement à titre d'exemple, on se réfère aux dessins annexés, sur lesquels :
- la figure 1 est une vue schématique en coupe longitudinale d'un dispositif de chauffage-ventilation et/ou de climatisation selon l'invention;
- la figure 2 est une vue en coupe selon la ligne II-II de la figure 1;
- la figure 3 est une vue en coupe selon la ligne III-III de la figure 1;
- la figure 4 est une vue en coupe selon la ligne IV-IV de la figure 1;
- la figure 5 est une vue en coupe partielle selon la ligne V-V de la figure 1;
- la figure 6 est une vue en perspective du boîtier central du dispositif de la figure 1;
- la figure 7 est une vue en coupe partielle, à échelle agrandie, selon la ligne VII-VII de la figure 6;
- la figure 8 est une vue en coupe partielle analogue à celle de la figure 5, dans un exemple de construction;
- la figure 9 est une vue de face, à échelle réduite, de la bouche d'aération.

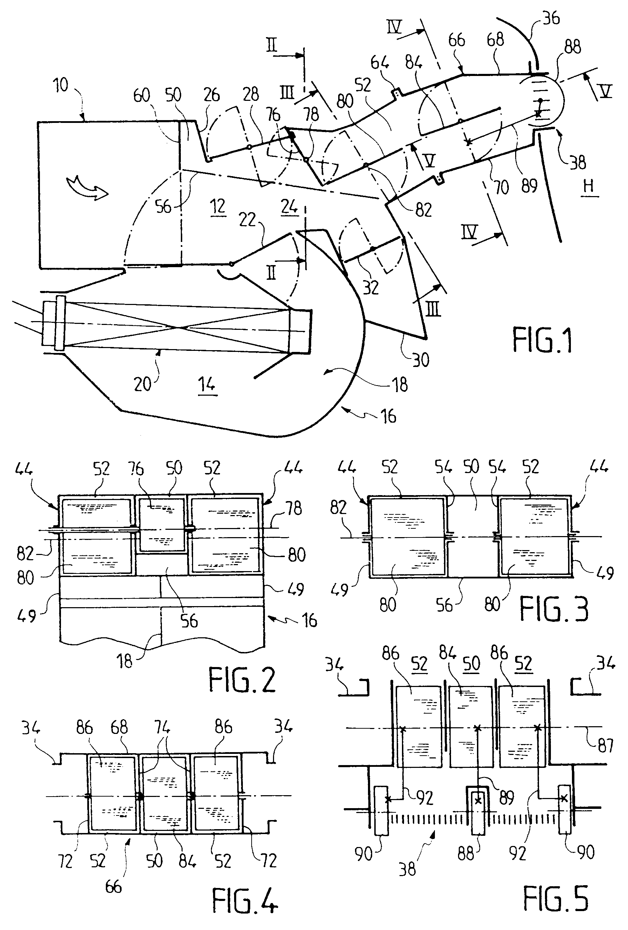

Le dispositif représenté à la figure 1 comprend un pulseur 10 propre à envoyer de l'air froid qui provient, soit de l'extérieur de l'habitacle H d'un véhicule automobile et qui peut être le cas échéant climatisé, soit de l'air recyclé provenant de l'intérieur de l'habitacle H.

L'air froid provenant du pulseur est dirigé vers une branche 12 de transmission d'air froid et vers une branche 14 de réchauffage d'air, toutes deux formées à l'intérieur d'un boîtier 16 divisé par une cloison médiane 18. Cette dernière permet ainsi de définir à l'intérieur du boîtier deux régions symétriques réservées respectivement à la partie droite et à la partie gauche de l'habitacle du véhicule. La cloison 18 divise également chacune des branches 12 et 14 en deux parties symétriques.

La branche 14 possède une configuration en U et elle comporte un échangeur de chaleur 20 alimenté par le liquide de refroidissement du moteur du véhicule. Les branches 12 et 14 ont une entrée commune alimentée par le pulseur 10 et une sortie commune contrôlée par un volet de mixage 22 pour assurer la répartition du débit d'air froid dans la branche 12 et du débit d'air chaud dans la branche 14 et obtenir ainsi, dans une zone de mixage 24, un air mixé à température réglable. A partir de la zone de mixage 24 (divisée en deux par la cloison 18), l'air mixé est envoyé vers au moins une bouche 26 de dégivrage-désembuage du pare-brise contrôlée par volet 28 et vers au moins une bouche 30 débouchant vers la partie inférieure de l'habitacle et contrôlée par un volet 32. De l'air mixé est également envoyé vers deux conduits 34 (figure 4) menant à deux bouches latérales (non représentées) situées respectivement du côté droit et du côté gauche de la planche de bord 36 du véhicule automobile. Le débit d'air mixé traversant les deux conduits 34 est contrôlé par deux volets (non représentés).

Le dispositif de l'invention comprend en outre des moyens permettant de distribuer simultanément de l'air froid et de l'air mixé au travers d'une bouche d'aération 38, encore appelée "aérateur", disposée au centre de la planche de bord 36.

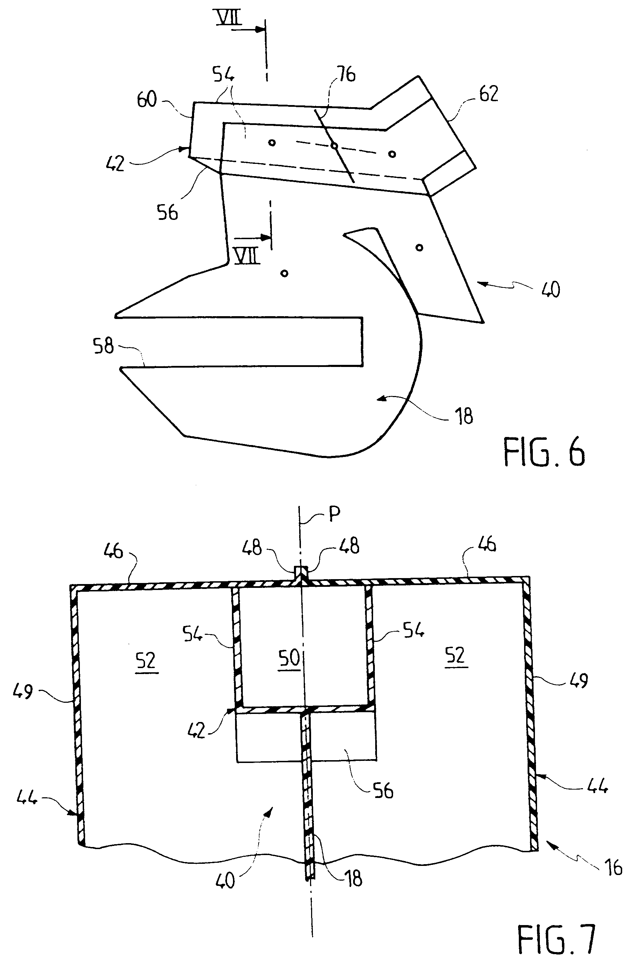

Le boîtier 16 comprend un boîtier central 40 formé par la cloison 18 et par une partie 42 à section en U ouverte vers le haut (figures 6 et 7). Cette partie 42 prolonge la cloison 18 vers le haut et s'étend symétriquement de part et d'autre du plan de symétrie P formé par la cloison. Le boîtier 16 comprend en outre deux boîtier latéraux 44 qui s'étendent symétriquement de part et d'autre du plan P. Les boîtiers latéraux 44 ont des parois supérieures respectives 46 prolongées chacune par un rebord 48 permettant leur assemblage le long du plan de symétrie P. En outre, chacun des boîtiers 44 comporte une paroi latérale 49 s'étendant à distance de la partie 42 en U du boîtier 40.

Le boîtier central 40 et les deux boîtiers latéraux 44 permettent ainsi de définir un premier conduit central 50 situé dans la partie 42 en U et deux conduits latéraux 52 compris chacun entre une paroi latérale 54 de la partie 42 en U et une paroi latérale 49 d'un boîtier 44. Le conduit 50 est délimité en partie inférieure par une paroi 56 de la partie 42, que l'on aperçoit également sur la figure 1.

Comme le montre la figure 6, la cloison 18 comporte une découpe 58 pour permettre le passage de l'échangeur de chaleur 20. La partie 42 en U délimitant le conduit 50 s'étend depuis une entrée 60 (figures 1 et 6) propre à être alimentée en air froid par le pulseur 10 jusqu'à une sortie 62 (figure 6) située à la jonction 64 du boîtier 16 et d'une conduite 66 (figure 1) aboutissant à la bouche d'aération 38.

La conduite 66 est délimitée principalement par une paroi supérieure 68, une paroi inférieure 70, deux parois latérales 72 et deux cloisons 74 qui contribuent à former le conduit central 50 et les deux conduits latéraux 52 (figure 4).

On comprendra que le boîtier 16 et la conduite 66 permettent de délimiter ainsi un conduit central 50 propre à acheminer de l'air froid depuis l'entrée 60 de ce conduit jusqu'à la bouche d'aération 38, ainsi que deux conduits 52 propres à acheminer de l'air mixé depuis la zone de mixage 24 jusqu'à la bouche d'aération 38.

Le dispositif comprend un volet 76 (figures 1, 2 et 6) monté pivotant autour d'un axe 78 s'étendant perpendiculairement au plan de symétrie P. Le volet 76 est disposé dans le conduit 50 dans une région intermédiaire comprise entre l'entrée 60 et la sortie 62 (jonction 64). Il peut, soit fermer, soit ouvrir le conduit 50, pour autoriser ou non le débit du flux d'air froid délivré dans la partie centrale de la bouche d'aération 38.

Par ailleurs, le dispositif comprend deux volets 80 placés respectivement à l'entrée des deux conduits d'air mixé 52, en amont de la jonction 64. Les deux volets 80 sont montés pivotants sur un axe commun 82 également perpendiculaire au plan de symétrie P. Les deux volets 80 permettent de régler le débit du flux d'air mixé acheminé vers les deux extrémités de la bouche d'aération 38, et cela quelle que soit la position, ouverte ou fermée, du volet 76 placé dans le conduit d'air froid.

Le volet 76 et les deux volets 80 sont actionnés par des moyens de commande synchronisés particuliers qui seront décrits dans une autre Demande de brevet déposée le même jour que la présente Demande de brevet.

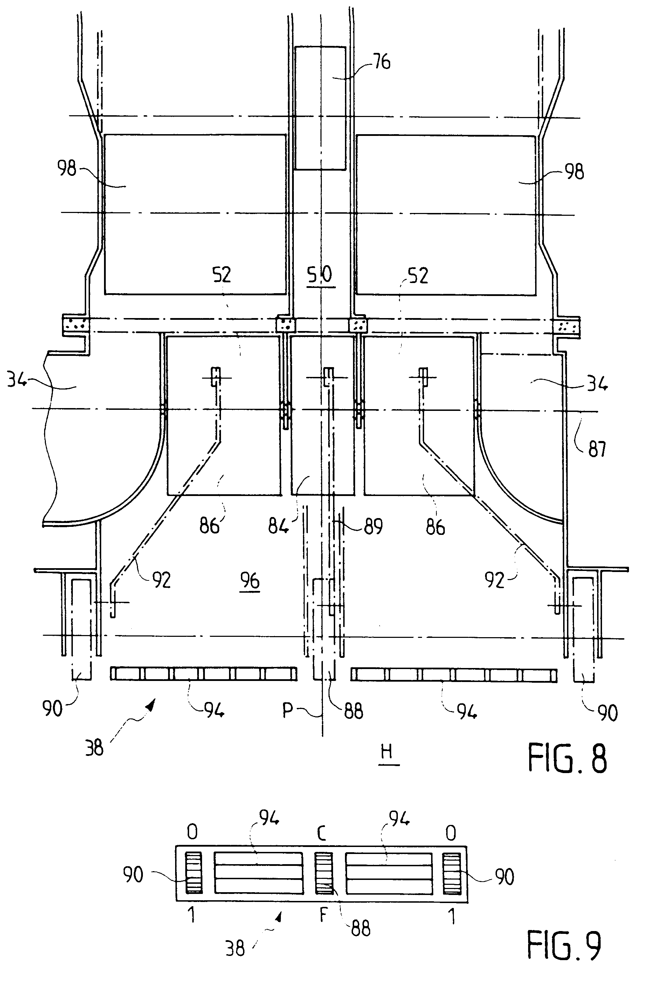

Conformément à l'invention, le dispositif représenté à la figure 1 comprend en outre trois volets de réglage de débit : un volet central 84 et deux volets latéraux 86 placés immédiatement en amont de la bouche d'aération 38 et montés pivotants autour d'un axe commun 87 (figures 4 et 5). Comme montré sur les figures 5 et 8, le volet 84 placé dans le conduit 50 est commandé par une molette rotative 88 par l'intermédiaire d'une biellette 89 tandis que les volets 86 placés respectivement dans les deux conduits 52 sont commandés chacun, de façon indépendante, par deux molettes rotatives 90 par l'intermédiaire d'une bielle 92.

Comme on le voit plus particulièrement sur la figure 8, le volet 84 contrôle le débit du flux d'air froid en sortie du premier conduit 50, lequel est alimenté ou non en air froid selon que le volet 76 est en position d'ouverture ou respectivement en position de fermeture.

Le volet 84 est déplaçable en continu entre une position de pleine ouverture du conduit 50 et une position de pleine fermeture du conduit 50, et il peut prendre une infinité de positions intermédiaires en fonction de la position angulaire de la molette 88.

Les deux seconds volets 86 sont propres à contrôler le débit du flux d'air mixé en sortie des deux seconds conduits 52, et cela de façon séparée.

Chacun des volets pivotants 86 est déplaçable en continu entre une position de pleine ouverture du conduit 52 correspondant et une position de pleine fermeture du conduit, et peut prendre une infinité de positions intermédiaires en fonction de la position angulaire de la molette rotative correspondante 90.

Comme on le voit sur les figures 8 et 9, la bouche d'aération 38 possède une forme générale rectangulaire dont la plus grande dimension est disposée horizontalement, au centre de la planche de bord 36 (figure 1) du véhicule automobile.

La bouche d'aération 38 comprend deux grilles 94 à commande séparée pouvant être orientées chacune dans deux positions perpendiculaires.

Les deux grilles 94 sont situées symétriquement de part et d'autre de l'axe de symétrie P qui s'étend verticalement dans le véhicule automobile. La molette 88 est située entre les deux grilles 94, tandis que les deux molettes 90 sont situées de part et d'autre des deux grilles 94. Ainsi, chacune des grilles 94 est entourée d'un côté par une molette 90 et de l'autre par la molette 88.

La molette 88 est déplaçable en continu entre une position "chaud" et une position "froid" représentées respectivement par les lettres "C" et "F" sur la figure 9. Dans les positions "chaud" et "froid", le volet 84 est respectivement en position de pleine ouverture et de pleine fermeture du conduit 50.

Chacune des molettes 90 est déplaçable en continu entre une position de pleine ouverture du conduit 52 (représentée par le chiffre "1" sur la figure 9) et une position de fermeture totale du conduit 52, (représentée par le chiffre "0" sur la figure 9).

Comme on peut le voir sur la figure 8, les sorties respectives du conduit 50 et des deux conduits 52 débouchent dans une chambre de mélange 96 dans laquelle l'air froid issu du conduit 50 et l'air mixé issu des conduits 52 peuvent se mélanger avant d'être distribués dans l'habitacle au travers de la bouche d'aération 38. On comprendra que chacune des grilles 94 est traversée par un flux d'air mélangé résultant du mélange du flux d'air mixé provenant du conduit 52 qui lui fait face et d'une partie du flux d'air froid issu du conduit 50. On peut ainsi homogénéiser la température du flux d'air qui traverse chacune des grilles 94 tout en réglant séparément la température des deux flux mélangés qui traversent respectivement les deux grilles 94. De la sorte, on peut envoyer du côté du conducteur et du côté du passager des flux d'air ayant des températures choisies, respectivement différentes.

On a représenté également sur la figure 8 deux volets 98 permettant de contrôler, de façon en soi connue, les débits respectifs des flux d'air mixés distribués aux bouches latérales par les deux conduits 34 cités plus haut.

Bien entendu, l'invention n'est pas limitée à la forme de réalisation décrite précédemment seulement à titre d'exemple.

Ainsi, il est possible de prévoir un seul conduit de distribution d'air froid et un seul conduit de distribution d'air mixé aboutissant à la bouche d'aération commune.

Par ailleurs, on comprendra que le volet 76 et les deux volets 80 ne sont pas obligatoires, ils peuvent être supprimés ou le cas échéant remplacés par un seul volet commun, comme enseigné par le document DE-A-3 338 768 déjà mentionné.

## Revendications

1. Dispositif de chauffage-ventilation et/ou de climatisation pour l'habitacle d'un véhicule automobile, comprenant au moins un premier conduit (50) et au moins un second conduit (52) propres à distribuer respectivement un flux d'air froid et un flux d'air mixé au travers d'une bouche d'aération commune (38) communiquant avec l'habitacle (H), ledit dispositif comprenant un premier volet (84) et un second volet (86) disposés en amont de la bouche d'aération (38) ainsi que des premiers moyens de commande (88, 89) agissant sur le premier volet (84) et des seconds moyens de commande (90, 92) agissant sur le second volet (86), caractérisé en ce que le premier volet (84) est propre à contrôler uniquement le débit du flux d'air froid en sortie du premier conduit (50) et le second volet (86) est propre à contrôler uniquement le débit du flux d'air mixé en sortie du second conduit (52).

2. Dispositif selon la revendication 1, caractérisé en ce que le premier volet (84) est un volet pivotant propre à rendre un multiplicité de positions entre une position de plein ouverture et une position de pleine fermeture du premier conduit (50).

3. Dispositif selon l'une des revendications 1 et 2, caractérisé en ce que le second volet (86) est un volet pivotant propre à prendre une multiplicité de positions entre une position de pleine ouverture et une position de peine fermeture du second conduit (52).

4. Dispositif selon l'une des revendications 1 à 3, caractérisé en ce que les premiers moyens de commande agissant sur le premier volet (84) comprenant une molette rotative (88) agissant sur la position angulaire du volet (84) par l'intermédiaire d'une biellette (89).

5. Dispositif selon l'une des revendications 1 à 4, caractérisé en ce que les seconds moyens de commande agissant sur le second volet (86) comprennent une mollette rotative (90) agissant sur la position angulaire du volet (86) par l'intermédiaire d'une biellette (92).

6. Dispositif selon d'une des revendications 1 à 5, caractérisé en ce qu'il comprend un premier conduit (50) de distribution d'air froid contrôlé par un premier volet (84) et placé entre deux seconds conduits (52) de distribution d'air mixé contrôlés chacun par un second volet (86).

7. Dispositif selon l'une des revendications 1 à 6, caractérisé en ce que la bouche d'aération (38) comprend deux grilles (94) dont l'une est propre à être traversée par le flux d'air mixé provenant de l'un des seconds conduits (52) et par une partie du flux d'air froid provenant du premier conduit (50), et dont l'autre est propre à être traversée par le flux d'air mixé provenant de l'autre second conduit (52) et de l'autre partie du flux d'air provenant du premier conduit (50).

8. Dispositif selon la revendication 7, caractérisé en ce que les premiers moyens de commande comprennent une mollette rotative (88) disposée entre les deux grilles (94) et agissant sur le volet (84), tandis que les seconds moyens de commande comprennent deux mollettes rotatives (90) disposées de part et d'autre des deux grilles (94) et agissant respectivement sur les deux seconds volets (86).

9. Dispositif selon l'une des revendications 1 à 8, caractérisé en ce qu'il comprend une chambre de mélange (96) située entre les sorties respectives du premier conduit (50) et du second conduit (52), d'une part, et la bouche d'aération (38), d'autre part.

## Claims

1. Apparatus for heating and ventilating, and/or air conditioning, the cabin of a motor vehicle, comprising at least one first duct (50) and at least one second duct (52), adapted to distribute respectively a stream of cold air and a stream of mixed air through a common aerator vent (38) communicating with the cabin (H), the said apparatus including a first flap valve (84) and a second flap valve (86), which are disposed upstream of the aerator vent (38), together with first control means (88, 89) acting on the first flap valve (84), and second control means (90, 92) acting on the second flap valve (86), characterised in that the first flap valve (84) is adapted to control only the flow of the cold air stream leaving the first duct (50), and the second flap valve (86) is adapted to control only the flow of the mixed air stream leaving the second duct (52).

2. Apparatus according to Claim 1, characterised in that the first flap valve (84) is a pivoting flap valve which is adapted to assume a multiplicity of positions between a fully open position and a fully closed position of the first duct (50).

3. Apparatus according to Claim 1 or Claim 2, characterised in that the second flap valve (86) is a pivoting flap valve adapted to assume a multiplicity of positions between a fully open position and a fully closed position of the second duct (52).

4. Apparatus according to one of Claims 1 to 3, characterised in that the first control means acting on the first flap valve (84) comprise a rotatable thumb wheel (88) acting on the angular position of the flap valve (84) through a crank (89).

5. Apparatus according to one of Claims 1 to 4, characterised in that the second control means acting on the second flap valve (86) comprise a rotatable thumb wheel (90), acting on the angular position of the valve (86) through a crank (92).

6. Apparatus according to one of Claims 1 to 5, characterised in that it includes a first cold air distribution duct (50) controlled by a first flap valve (84) and arranged between two second ducts (52)for distribution of the mixed air, each of which is controlled by a second flap valve (86).

7. Apparatus according to one of Claims 1 to 6, characterised in that the aerator vent (38) comprises two grilles (94), one of which is arranged so that the mixed air stream from one of the two second ducts (52),and one part of the cold air stream from the first duct (50), pass together through it, while the mixed air stream from the other second duct (52), and the other part of the air stream from the first duct (50), pass together through the other grille.

8. Apparatus according to Claim 7, characterised in that the first control means comprises a first rotatable thumb wheel (88) located between the two grilles (94) and acting on the flap valve (84), while the second control means comprises two rotatable thumb wheels (90) disposed on either side of the two grilles (94) and acting respectively on the two second flap valves (86).

9. Apparatus according to one of Claims 1 to 8, characterised in that it includes a mixing chamber (96) situated between the respective outlets of the first duct (50) and second duct (52) on the one hand, and the aerator vent (38) on the other.

## Patentansprüche

1. Vorrichtung zur Heizung, Lüftung und/oder Klimatisierung für den Fahrgastraum eines Kraftfahrzeugs, umfassend mindestens einen ersten Kanal (50) und mindestens einen zweiten Kanal (52), die einen Kaltluftstrom bzw. einen Mischluftstrom durch eine gemeinsame Luftauslaßdüse (38), die mit dem Fahrgastraum (H) in Verbindung steht, verteilen können, wobei die besagte Vorrichtung eine erste Klappe (84) und eine zweite Klappe (86) umfaßt, die vor der Luftauslaßdüse (38) angeordnet sind, sowie erste Betätigungsmittel (88, 89), die auf die erste Klappe (84) einwirken, und zweite Betätigungsmittel (90, 92), die auf die zweite Klappe (86) einwirken , **dadurch gekennzeichnet,** daß die erste Klappe (84) nur den Durchsatz des Kaltluftstroms am Ausgang des ersten Kanals (50) steuern kann und daß die zweite Klappe (86) nur den Durchsatz des Mischluftstroms am Ausgang des zweiten Kanals (52) steuern kann.

2. Vorrichtung nach Anspruch 1 , **dadurch gekennzeichnet,** daß die erste Klappe (84) eine Schwenkklappe ist, die eine Vielzahl von Positionen zwischen einer Position mit vollständiger Öffnung und einer Position mit vollständigem Verschluß des ersten Kanals (50) einnehmen kann.

3. Vorrichtung nach einem der Ansprüche 1 und 2, **dadurch gekennzeichnet,** daß die zweite Klappe (86) eine Schwenkklappe ist, die eine Vielzahl von Positionen zwischen einer Position mit vollständiger Öffnung und einer Position mit vollständigem Verschluß des zweiten Kanals (52) einnehmen kann.

4. Vorrichtung nach einem der Ansprüche 1 bis 3, **dadurch gekennzeichnet,** daß die ersten Betätigungsmittel, die auf die erste Klappe (84) einwirken, ein drehbares Rädchen (88) umfassen, das über eine Gelenkstange (89) auf die Winkelposition der Klappe (84) einwirkt.

5. Vorrichtung nach einem der Ansprüche 1 bis 4, **dadurch gekennzeichnet,** daß die Betätigungsmittel, die auf die zweite Klappe (86) einwirken, ein drehbares Rädchen (90) umfassen, das über eine Gelenkstange (92) auf die Winkelposition der Klappe (86) einwirkt.

6. Vorrichtung nach einem der Ansprüche 1 bis 5, **dadurch gekennzeichnet,** daß sie einen ersten Kaltluftverteilungskanal (50) umfaßt, der durch eine erste Klappe (84) gesteuert wird und zwischen zwei zweiten Mischluftverteilungskanälen (52) angeordnet ist, die jeweils durch eine zweite Klappe (86) gesteuert werden.

7. Vorrichtung nach einem der Ansprüche 1 bis 6, **dadurch gekennzeichnet,** daß die Luftauslaßdüse (38) zwei Gitter (94) umfaßt, von denen eines von dem aus einem der beiden zweiten Kanäle (52) kommenden Mischluftstrom und einem Teil des aus dem ersten Kanal (50) kommenden Kaltluftstroms durchströmt werden kann, während das andere von dem aus dem anderen zweiten Kanal (52) kommenden Mischluftstrom und von dem anderen Teil des aus dem ersten Kanal (50) kommenden Luftstroms durchströmt werden kann.

8. Vorrichtung nach Anspruch 7 , **dadurch gekennzeichnet,** daß die ersten Betätigungsmittel ein drehbares Rädchen (88) umfassen, das zwischen den beiden Gittern (94) angeordnet ist und auf die erste Klappe (84) einwirkt, während die zweiten Betätigungsmittel zwei drehbare Rädchen (90) umfassen, die beiderseits der beiden Gitter (94) angeordnet sind und auf die beiden zweiten Klappen (86) einwirken.

9. Vorrichtung nach einem der Ansprüche 1 bis 8, **dadurch gekennzeichnet,** daß sie eine Mischkammer (96) umfaßt, die zwischen den Ausgängen des ersten Kanals (50) und des zweiten Kanals (52) einerseits und der Luftauslaßdüse (38) andererseits angeordnet ist.
